Europäisches Patentamt

European Patent Office

Office européen des brevets

(11) Publication number: **0 122 898**
**B1**

# EUROPEAN PATENT SPECIFICATION

(45) Date of publication of patent specification: **16.09.87**

(51) Int. Cl.⁴: **H 01 G 1/00,** H 01 G 4/32

(21) Application number: **84850108.6**

(22) Date of filing: **05.04.84**

(54) **Moisture-protected wound capacitor voll and a method for manufacturing such voll.**

(30) Priority: **19.04.83 SE 8302191**

(43) Date of publication of application:
**24.10.84 Bulletin 84/43**

(45) Publication of the grant of the patent:
**16.09.87 Bulletin 87/38**

(84) Designated Contracting States:
**DE FR GB IT NL**

(56) References cited:
**US-A-1 870 803**
**US-A-3 242 403**
**US-A-3 435 308**

(73) Proprietor: **TELEFONAKTIEBOLAGET L M ERICSSON**
**S-126 25 Stockholm (SE)**

(72) Inventor: **Johansson, Jan-Ulf Arne**
**Mejramsplan 3**
**S-393 65 Kalmar (SE)**
Inventor: **Tordsson, Hans Göran Roland**
**Trottorp 7701**
**S-388 02 Halltorp (SE)**
Inventor: **Hedqvist, Gösta Torbjörn**
**Gamla Kungsgatan 8**
**S-392 33 Kalmar (SE)**
Inventor: **Larsson, Hans Inge Robert**
**Hagtornsvägen 15**
**S-386 00 Färjestaden (SE)**
Inventor: **Nilsson, Stig Kjell Ronny**
**Algutsrum**
**S-386 00 Färjestaden (SE)**

(74) Representative: **Johnsson, Helge et al**
**Telefonaktiebolaget L M Ericsson**
**S-126 25 Stockholm (SE)**

Courier Press, Leamington Spa, England.

## Description

### Technical Field

The present invention relates to a moisture-protected wound capacitor roll which is wound of elongated ribbons, laid one upon the other, of dielectric material with associated electrodes which consist of metal coating on the ribbons, water impermeable ribbon being inserted between the ribbons, said impermeable ribbon extending at least one turn from the final ends of the windings, furthermore it relates to a method for manufacturing such a moisture-protected capacitor roll.

### Background Art

Moisture-protected capacitor rolls of the above type are known, e.g. from the US Patent Specification 3 435 308.

The disadvantage of said known roll is that production cannot be automated, which makes its manufacture comparatively expensive.

### Disclosure of Invention

The object of the present invention is to provide a moisture-protected wound capacitor roll, which can be produced automatically and which is thereby cheap to manufacture.

This is obtained by the capacitor roll and the method in accordance with the invention being given by the characterizing features disclosed in the claims.

### Description of Figure

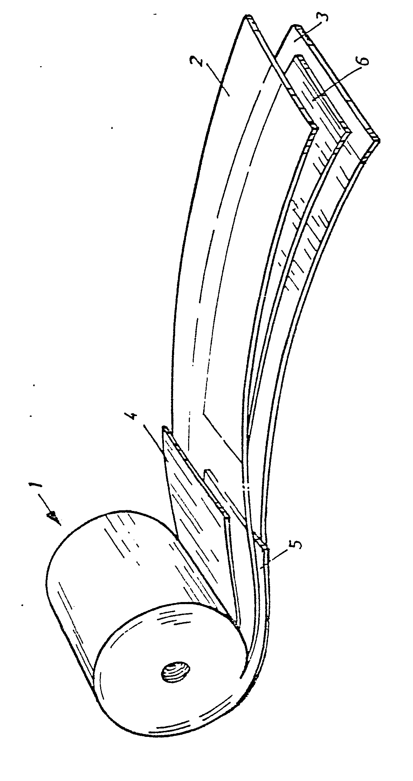

The invention will now be described in detail with reference to the appended drawings, on which the sole Figure is a perspective view of an embodiment of a moisture-protected wound capacitor roll in accordance with the invention.

### Preferred Embodiment

A perspective view is shown in the Figure of an embodiment of a moisture-protected capacitor roll in accordance with the invention, generally denoted by the numeral 1, which is partially unwound, has been wound round an unillustrated winding mandrel, using two elongated ribbons 2, 3 laid one upon the other, the ribbons being of dielectric material, e.g. paper or plastics, and each has its associated electrode 4, 5, respectively. In the illustrated embodiment the electrode 4 and 5 are metallized coatings on the dielectric ribbons 2 and 3. The number of ribbons of dielectric material and metal coating is naturally not limited to two but may be varied, depending on the desired performance of the capacitor.

Between themselves, the electrodes 4 and 5 define the electrically active area of the capacitor roll.

In accordance with the invention, the active area of the capacitor roll 1 terminates at least one wrapping turn from the final end of the roll 1 to form an inactive area in which a water-impermeable ribbon 6, e.g. of aluminium is inserted, said ribbon 6 extending at least one turn around the wrapping 1.

In the embodiment of the roll 1 illustrated in the Figure, the inactive area at the final end of the roll has been provided by demetallizing i.e. removing the metallic coating 4, 5 from at least one of the ribbons 2 and 3 at least one turn before its final end. The water-impermeable ribbon 6 has been inserted in the inactive area thus formed between the ribbons 2 and 3 and thereafter wound together with the dielectric ribbons 2 and 3 at least one turn round the wrapping 1.

Both electrodes 4 and 5 do not of course need to be demetallized to form the electrically inactive area, it is sufficient to demetallize one of the electrodes. If the water-impermeable ribbon 6 is made from an aluminium ribbon, it must however be ensured that this ribbon does not come into contact with either of the electrodes 4 and 5.

Manufacturing of a moisture-protected wound capacitor roll in accordance with the invention is easily automated with the aid of means known per se for ribbon demetallizing and cutting.

## Claims

1. A moisture-protected wound capacitor roll (1) wound of elongated ribbons (2, 3), laid one upon the other, of dielectric material with associated electrodes (4, 5) which consist of metal coating on the ribbons, a water impermeable ribbon (6) being inserted between the ribbons, said impermeable ribbon extending at least one turn from the final end of the windings characterized in that the final end of at least one of the ribbons is demetallized, the demetallized area beginning at least one turn from the final end of the windings, and in that said water impermeable ribbon (6) does not come into contact with either of the electrodes (4, 5).

2. Method of producing a moisture protected wound capacitor roll (1) comprising the steps of laying elongated ribbons of dielectric material (2, 3) one upon the other together with associated electrodes (4, 5) which consist of metallic coating on the ribbons, winding the ribbons and inserting a water impermeable ribbon (6) between the ribbons at least one turn from the final end of the windings, the method being characterized by the steps of demetallizing at least one of the ribbons at least one winding turn from its final end and inserting the water impermeable ribbon (6) in the demetallized area.

## Patentansprüche

1. Feuchtigkeitsgeschützte Wickelkondensatorrolle (1), die aus verlängerten, übereinander gelegten Bändern (2, 3) aus dielektrischem Material mit zugehörigen Elektroden (4, 5) gewickelt sind, welche aus einem Metallüberzug auf den Bändern bestehen, wobei ein wasserundurchlässiges Band (6) zwischen die Bänder eingefügt ist, wobei sich das undurchlässige Band zumindest eine Wicklung vom Ende der Wicklungen erstreckt, dadurch gekennzeichnet, daß das Ende mindestens einer der Bänder entmetallisiert ist, wobei die entmetallisierte Fläche mindestens eine Wicklung vor dem Ende der Wicklungen beginnt, und daß das wasserundurchlässige Band (6) mit keiner der beiden Elektroden (4, 5) in Berührung steht.

2. Verfahren zur Herstellung einer feuchtigkeitsgeschützten Wickelkondensatorrolle (1) umfassend die Schritte: Übereinanderlegen von verlängerten Bändern aus dielektrischem Material (2, 3) zusammen mit zugeordneten Elektroden (4, 5), die aus einem metallischen Überzug auf den Bändern bestehen, Wickeln der Bänder und Einfügen eines wasserundurchlässigen Bandes (6) zwischen die Bänder zumindest eine Windung vor dem Ende der Windungen, gekennzeichnet durch die Schritte der Entmetallisierung von zumindestens einem der Bänder, mindestens eine Windung vor ihrem Ende und Einfügen des wasserundurchlässigen Bandes (6) in den entmetallisierten Bereich.

## Revendications

1. Enroulement (1) de condensateur bobiné protégé de l'humidité, formé de rubans allongés (2, 3), appliqués les uns sur les autres, en matière diélectrique avec des électrodes associées (4, 5) qui sont constituées d'un revêtement métallique sur les rubans, un ruban (6) imperméable à l'eau étant inséré entre les rubans, ledit ruban imperméable s'etendant sur au moins un tour à partir de l'extrémité finale des bobinages, caractérisé en ce que l'extrémite finale d'au moins l'un des rubans est démétallisée, la zone démétallisée commençant à au moins un tour de l'extrémité finale des bobinages, et en ce que ledit ruban (6) imperméable à l'eau ne vient en contact avec aucune des électrodes (4, 5).

2. Procédé de production d'un enroulement (1) de condensateur bobiné protégé de l'humidité, comprenant les étapes qui consistent à étendre des rubans allongés en matière diélectrique (2, 3) l'un sur l'autre, avec des électrodes associées (4, 5) qui sont constituées d'un revêtement métallique des rubans, à bobiner les rubans et à insérer un ruban (6) imperméable à l'eau entre les rubans à au moins un tour de l'extrémité finale des bobinages, le procédé étant caractérisé par les étapes qui consistent à démétalliser au moins l'un des rubans sur au moins un tour de bobinage à partir de son extrémité finale et à insérer le ruban (6) imperméable à l'eau dans la zone démétallisée.

0 122 898

1